# EUROPÄISCHE PATENTSCHRIFT

(11) **EP 1 359 331 B1**
(45) Veröffentlichungstag und Bekanntmachung des Hinweises auf die Patenterteilung: **01.06.2005**
(21) Anmeldenummer: 03405285.2
(22) Anmeldetag: 23.04.2003
(51) Int. Cl.: F16B 37/04

(54) **Schienenmutterprofil**
Profil section of a rail nut
Profil d'écrou pour rail

(30) Priorität: 02.05.2002 DE 10219732
(43) Veröffentlichungstag der Anmeldung: 05.11.2003
(73) Patentinhaber: HILTI Aktiengesellschaft, 9494 Schaan (LI)
(72) Erfinder: Herb, Armin, 86974 Apfeldorf (DE); Hoffman, Armin, 86899 Landsberg (DE); Unverzagt, Stefan, 86929 Penzing (DE)
(74) Vertreter: Wildi, Roland

(56) Entgegenhaltungen:
- EP-A- 1 201 940
- DE-A- 3 811 974
- US-A- 3 680 620
- US-B1- 6 447 200

## Beschreibung

Die Erfindung betrifft eine Befestigungsvorrichtung zum Befestigen von Rohren oder dergleichen Gegenständen mit einer, einen C-förmigen Querschnitt sowie eine Längsöffnung aufweisenden, Montageschiene und mit einer Schienenmutter, die eine, parallel zur Querschnittsebene verlaufende, Breite aufweist, die höchstens der Breite der Längsöffnung entspricht und senkrecht dazu eine, parallel zur Querschnittsebene verlaufende, Länge aufweist, die grösser als die Breite der Längsöffnung ausgebildet ist.

Befestigungsvorrichtungen der oben genannten Art finden insbesondere Anwendung beim Abhängen und Verstreben von Gegenständen, wie beispielsweise Rohren oder dergleichen. Auf einen Untergrund oder Bauteil wird eine Montageschiene mit einer Längsöffnung befestigt, beispielsweise durch mehrere Segmentanker. Zur Befestigung eines Befestigungselements an der Montageschiene wird eine Halteplatte durch die Längsöffnung in den Innenraum der Montageschiene eingeführt und um einen Winkel verschwenkt, beispielsweise 90°, so dass das Halteteil die freien Enden, sogenannte Haltevorsprünge oder die Längsöffnungsränder der Montageschiene hintergreift. Das Halteteil weist zum Festlegen eines Befestigungselements, beispielsweise einer Gewindestange, eine Durchgangsbohrung mit einem Innengewinde auf, das in einen formschlüssigen Eingriff mit einer zumindest teilweise an dem Befestigungselement angeordneter Aussenprofilierung bringbar ist. Um ein Einführen des Halteteils durch die Längsöffnung zu gewährleisten, entspricht die Breite des Halteteils höchstens der Breite der Längsöffnung und dadurch, dass die sich senkrecht zur Breite des Halteteils erstreckende Länge grösser als die Breite der Längsöffnung ausgebildet ist, ist durch ein Verschwenken des in den Innenraum eingeführten Halteteils ein Hintergreifen der Haltevorsprünge, beziehungsweise der Längsöffnungsränder der Montageschiene durch die Halteplatte möglich.

Aus dem allgemein bekannten Stand der Technik, beispielsweise der DE 38 11 974 C2 ist eine Befestigungsvorrichtung mit einer C-förmigen Montageschiene und einem unrunden Halteteil bekannt. Das Halteteil ist beispielsweise als Gussteil ausgebildet.

Nachteilig bei dieser allgemein bekannten Lösung ist, dass zur Herstellung des Halteteils relativ zu dessen Abmessungen viel Material aufgewendet werden muss, was einer wirtschaftlichen Herstellung der Befestigungsvorrichtung nicht dienlich ist.

Ferner wirkt sich die massive Bauweise der Halteplatte negativ auf das Gesamtgewicht der Befestigungsvorrichtung aus, insbesondere falls mehrere Halteplatten zur Anwendung gelangen.

Aus der EP 1 201 940 A2 ist eine als Schienenmutter ausgebildete, im Querschnitt U-förmige Halteplatte bekannt, wobei die beiden Schenkel der Versteifung und der Positionierung der Halteplatte dienen und der die beiden Schenkel verbindende Abschnitt ein Innengewinde aufweist. Die Stege weisen jeweils zwei das Innengewinde berandende Sicken zur Stabilisierung des Innengewindes und als Überlastschutz für die Befestigungsvorrichtung auf.

Aus der US 3,680,620 A ist eine in einen Profilstab, der im Querschnitt etwa T-förmige Längsnuten aufweist, einsetzbare Mutter bekannt, die zwei jeweils mit Halbgewinde versehende Mutterhälften aufweist, die über einen separaten federelastischen Ring gehalten sind. Durch Zusammendrücken des Rings ist die Mutter in den Profilstab einführbar, wobei durch die Ausdehnung des federelastischen Rings die Mutter gegen Längsverschiebung im Profilstab gehalten ist. In das von den Mutterhälften geschaffenen Gewinde ist eine Schraube eindrehbar.

Der vorliegenden Erfindung liegt die Aufgabe zugrunde, eine Befestigungsvorrichtung mit einer Montageschiene und einer Schienenmutter zu schaffen, die wirtschaftlich herstellbar und ein geringes Gewicht aufweist und ausserdem eine hohe Stabilität gewährleistet, sowie ein gutes Zuglastverhalten aufweist.

Erfindungsgemäss wird die Aufgabe dadurch gelöst, dass die Schienenmutter einteilig aus einem Hohlprofil gebildet ist, das an zumindest zwei Stellen eingeschnürt ist, wobei zwischen diesen beiden Einschnürungen ein Durchbruch erzeugt ist, der wenigstens zwei parallel zur Längsachse des Durchbruchs zueinander verlaufende Zylinderabschnitte aufweist, die jeweils Innengewindeabschnitte zur Befestigung eines Befestigungselements, insbesondere einer Gewindestange, aufweisen. Die gegenüberliegenden Wandabschnitte der Einschnürungen sind verbunden.

Dadurch, dass die Schienenmutter aus einem Hohlprofil gebildet ist, können zu deren Herstellung handelsübliche Standardprofile verwendet werden, welche geringe Herstellungskosten aufweisen. Beispielsweise sind die Hohlprofile als Rohr-, Rechteck- oder Mehreck-Hohlprofil ausgebildet. Mit den Einschnürungen ist ein Durchbruch geschaffen, der entsprechend des Durchmessers des für die Befestigungsvorrichtung vorgesehenen Befestigungselements ausgebildet ist. Damit sind aus ein und demselben Ausgangsprofil mehrere unterschiedliche Schienenmuttern herstellbar. Beispielsweise kann der Durchbruch für eine M8-, M10- oder M12-Gewindestange ausgebildet sein, wobei jeweils z. B. Rohrprofile mit identischen Abmessungen zur Herstellung der unterschiedlichen Schienenmuttern verwendet werden. Die Innengewindeabschnitte der Zylinderabschnitte sind beispielsweise mit einem Gewinde gemäss dem DIN-Standard versehen, wobei auch andere, länderspezifische Gewindearten und auch Sonderausführungen von Gewinden vorgesehen sein können.

Die Einschnürungen bilden um den Durchbruch wellenförmig ausgebildete Stege der Schienenmutter, wobei eine Überlastung im Bereich des Innengewindes verhindert wird und die Stabilität der Schienenmutter erhöht ist. Trotz dem gegenüber den bekannten Schienenmuttern geringen Materialverbrauch der erfindungsgemässen Schienenmutter ist deren Belastbarkeit im Vergleich mit den bekannten Lösungen gewährleistet. Ausserdem erfüllen die Einschnürungen die Funktion von Sollbiegestellen, um die Montageschiene und somit die gesamte Befestigungsvorrichtung vor einer Überlastung zu schützen. Des Weiteren ist der herstellungstechnische Aufwand für die erfindungsgemässe Schienenmutter gering.

Die Verbindung der gegenüberliegenden Wandabschnitte der Einschnürung kann beispielsweise durch Schweissen, Löten, Kleben geschaffen werden. Dadurch bleibt der Durchbruch und somit das für das Befestigungsmittel in diesem Durchbruch angeordnete Innengewinde auch bei wechselnden Belastungen und über einen langen Zeitraum der Nutzung der Schienenmutter erhalten. Diese Ausführung stellt bezüglich des Materialaufwandes, der Wirtschaftlichkeit und der Belastbarkeit der Schienenmutter ein Optimum dar.

Vorzugsweise ist radial aussen von den Einschnürungen jeweils wenigstens ein Halteabschnitt angeordnet. Dieser Halteabschnitt ist durch die Konzentration von Material und dem Verhältnis der parallel zur Querschnittsebene verlaufenden Länge der Schienenmutter und der Breite der Längsöffnung der Montageschiene gegeben. Um die Kontaktfläche der Halteabschnitte mit den freien Rändern der Montageschiene zu vergrössern, kann die mit den Einschnürungen versehene Schienenmutter zusätzlich, unter Beibehaltung des gewünschten Durchmessers des Durchbruchs, in der Länge gestaucht sein, so dass die Halteabschnitte nur eine geringe Fläche an Durchbrüchen aufweisen.

Vorteilhafterweise weisen die Halteabschnitte eine Rändelung zum Eingriff mit den Rändern der Montageschiene auf. Dadurch kann die festgelegte Schienenmutter, insbesondere bei in Längsrichtung der Montagerichtung wirkende Kräfte, Belastungen aufnehmen, ohne dass die Schienenmutter sich dabei in unerwünschter Weise verschiebt. Bevorzugt weisen auch die freien Ränder der Montageschiene Rändelungen auf, die mit den Rändelungen der Halteabschnitte der Schienenmutter in Eingriff bringbar sind.

Vorteilhafterweise ist das Hohlprofil aus einem Bandmaterial geformt. Das entsprechend den vorhandenen inneren Abmessungen der Montageschiene und den auf die Schienenmutter wirkenden Belastungen abgelängte Bandmaterial ist an seinen axial in Richtung des Durchbruchs verlaufenden Enden verbunden, z. B. durch Schweissen, Löten oder Kleben der Enden. Damit können Schienenmutter hergestellt werden, die aufgrund ihrer Umfangslänge nur bedingt oder überhaupt nicht aus einem handelsüblichen Hohlprofil herstellbar sind. Mit dieser Ausführung sind beliebige Spezialformen von Schienenmuttern herstellbar. Die Einschnürungen können einerseits nach dem Verbinden der axial in Richtung des Durchbruchs fangslänge nur bedingt oder überhaupt nicht aus einem handelsüblichen Hohlprofil herstellbar sind. Mit dieser Ausführung sind beliebige Spezialformen von Schienenmuttern herstellbar. Die Einschnürungen können einerseits nach dem Verbinden der axial in Richtung des Durchbruchs verlaufenden Enden des Bandmaterials an der Schienenmutter ausgeformt werden oder anderseits vor dem Verbinden der axial in Richtung des Durchbruchs verlaufenden Enden des Bandmaterials ausgeformt werden.

Vorteilhafterweise besteht das Hohlprofil aus zumindest zwei Werkstückteilen. Die Werkstückteile werden zur Herstellung der Schienenmutter an deren axial in Richtung des Durchbruchs verlaufenden Enden verbunden, z. B. durch Schweissen, Löten oder Kleben. Die Werkstückteile können als sogenannte Halbfabrikate hergestellt sein, die in einem separaten Arbeitsgang zu einer Schienenmutter zusammensetzbar sind. Dabei können beispielsweise die Werkstückteile, welche die Bereiche der Halteabschnitte der Schienenmutter bilden, aus einem anderen Material als die Werkstückteile, welche den Bereich des Durchbruchs der Schienenmutter bilden, hergestellt sein. Damit lassen sich gegebenenfalls besondere Anforderungen an die Belastbarkeit der Schienenmutter berücksichtigen. Bei der Materialauswahl ist die Verbindbarkeit der Materialien zueinander zu berücksichtigen.

Vorzugsweise wird zur Herstellung des Hohlprofils Blechmaterial verwendet. Betreffend der Abmessungen der Schienenmutter sind die für die Befestigungsvorrichtung vorgesehenen Rahmenbedingungen zu berücksichtigen. Neben Metall kann zur Herstellung der Schienenmutter auch ein geeigneter Kunststoff verwendet werden.

Die Erfindung wird nachstehend anhand dreier Ausführungsbeispiele näher erläutert. Es zeigen:
- Fig. 1: einen Querschnitt durch eine Befestigungsvorrichtung mit einem im Längsschnitt dargestellten Befestigungselement;
- Fig. 2: eine perspektivische Aufsicht auf die Unterseite der in Fig. 1 dargestellten Schienenmutter, wobei diese gegenüber der Darstellung in Fig. 1 um 180° um ihre Längsachse nach oben gedreht ist;
- Fig. 3: eine perspektivische Aufsicht auf eine Variante der in Fig. 2 dargestellten Schienenmutter;
- Fig. 4: eine perspektivische Aufsicht auf eine weitere Variante der in Fig. 2 dargestellten Schienenmutter.

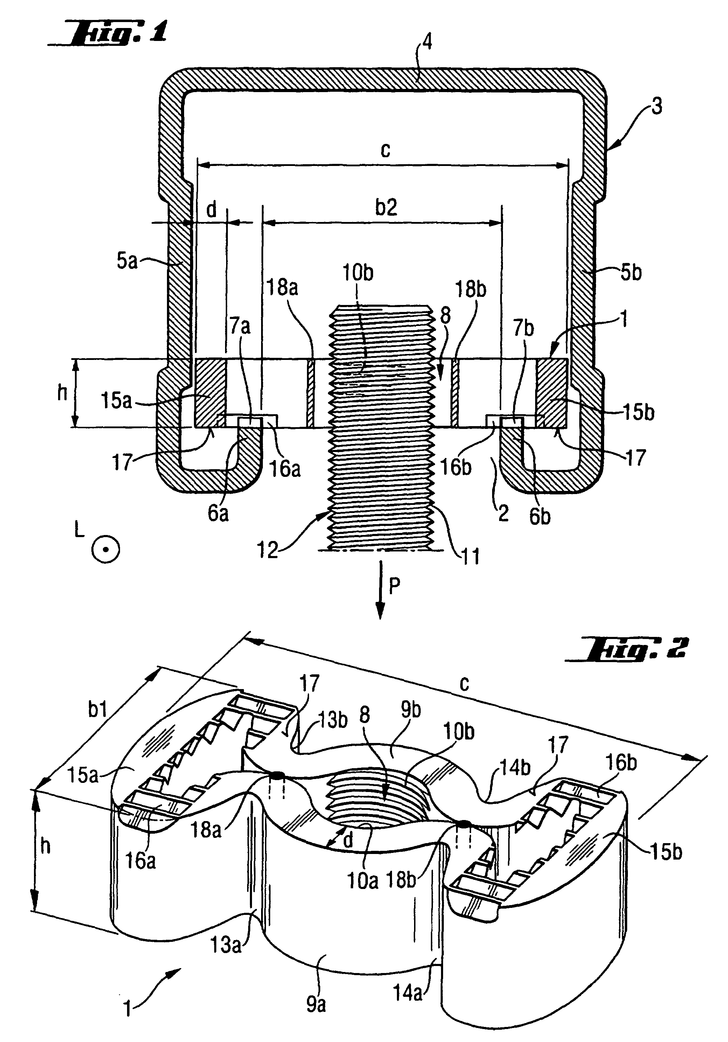

In den Fig. 1 bis 4 ist eine erfindungsgemässe Befestigungsvorrichtung mit einer, einen C-förmigen Querschnitt und eine Längsöffnung 2 aufweisenden, Montageschiene 3 und einer Schienenmutter 1 dargestellt.

Die in Fig. 1 im Querschnitt dargestellte Montageschiene 3 ist länglich und weist einen im Wesentlichen C-förmigen Querschnitt auf, wobei die Montageschiene 3 vorzugsweise aus einem einzigen Band aus verzinktem oder rostfreiem Stahlblech geformt ist. Die Montageschiene 3 weist eine Rückwand 4 und zu beiden Längsseiten etwa senkrecht davon abragende Seitenwände 5a bzw. 5b auf. An ihren freien Vorderenden sind die Seitenwände 5a, 5b etwa rechtwinklig, z. B. U-förmig, umgeknickt und bilden parallel zur Rückwand 4 verlaufende Stege 6a bzw. 6b, welche die in Längsrichtung L der Montageschiene 3 verlaufende Längsöffnung 2 bilden. Die der Rückwand 4 zugewandten Seiten der Stege 6a, 6b können mit einer Rändelung 7a, 7b versehen sein.

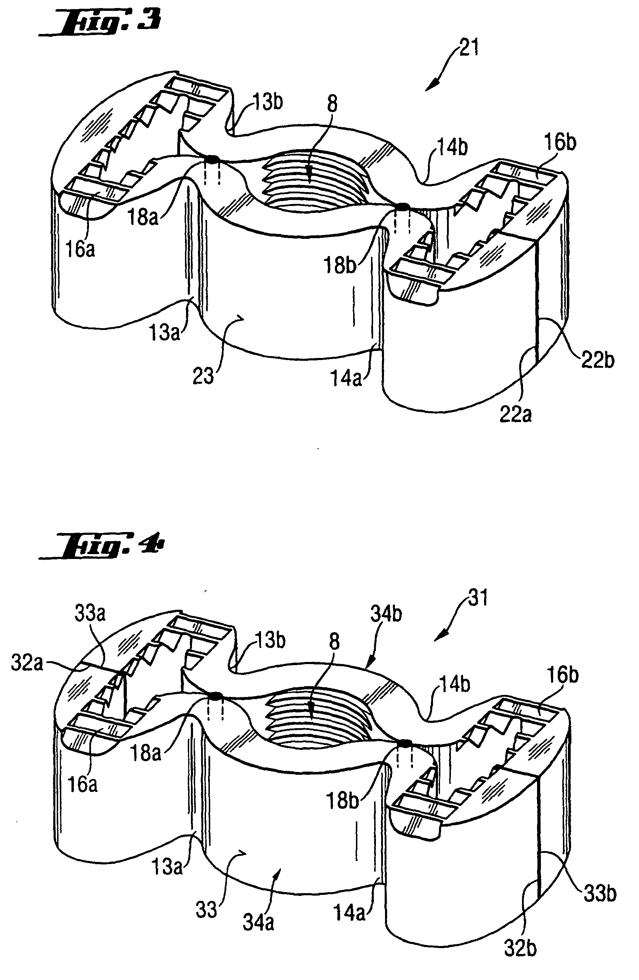

Die Schienenmutter 1 weist einen, quer zur Längsöffnung 2 verlaufenden, Durchbruch 8, der aus zwei Hohlzylinderabschnitten 9a, 9b gebildet ist, wie dies insbesondere aus den Fig. 2 bis 4 hervorgeht. Die Hohlzylinderabschnitte 9a, 9b weisen jeweils Innengewindeabschnitte 10a, 10b auf. Der Durchbruch 8 dient der formschlüssigen Aufnahme eines Befestigungselements, insbesondere eines mit einem Aussengewinde 11 versehenen Bolzens 12, wie er in Fig. 1 dargestellt ist. Die Schienenmutter 1 weist eine, parallel zur Querschnittsebene bzw. zur durch die Längsöffnung 2 gebildete Ebene verlaufende, Breite b1 auf, die etwa, beziehungsweise höchstens, der Breite b2 der Längsöffnung 2 entspricht und weist senkrecht dazu eine, parallel zur Querschnittsebene verlaufende, Länge c auf, die grösser als die Breite b2 der Längsöffnung 2 ausgebildet ist. Die Schienenmutter 1 weist ausserdem im Wesentlichen eine gleichmässige Wandstärke d auf.

Als Ausgangsmaterial für die Herstellung der in Fig. 2 gezeigten Schienenmutter 1 dient ein Rohrprofil, welches auf die gewünschte Länge, d. h. die Höhe h der Schienenmutter 1, abgelängt wurde. Beispielsweise mit einem beisszangenähnlichen Werkzeug wird das abgelängte Rohrprofil derart verformt, dass durch die, aus diesem Bearbeitungsvorgang resultierenden Einschnürungen 13a, 13b und 14a, 14b der Durchbruch 8 zur Aufnahme der Gewindestange 12 geschaffen wird. Zur Verbesserung der Stabilität der Schienenmutter 1 sind die gegenüberliegenden Wandabschnitte an den Stellen 18a, 18b bei den Einschnürungen 13a, 13b und 14a, 14b, z. B. durch Schweissen, Löten oder Kleben, miteinander verbunden. Die durch die Einschnürungen 13a, 13b und 14a, 14b gebildeten Sicken dienen einerseits der Stabilisierung des Innengewindes 10a, 10b und andererseits als Überlastschutz für die Befestigungsvorrichtung. Greift am Befestigungselement, insbesondere am Bolzen 12, eine zu hohe Last P an, so führt dies im Bereich Einschnürungen 13a, 13b und 14a, 14b zu einem Einknicken der Schienenmutter 1. Dieser Überlastschutz verhindert, dass durch eine unzulässig hoch angebrachte Last P die gesamte Befestigungsvorrichtung versagt.

Radial ausserhalb und seitlich der Einschnürungen 13a, 13b und 14a, 14b ist jeweils ein Halteabschnitt 15a bzw. 15b angeordnet, wobei die Halteabschnitte 15a, 15b auf ihrer, der Längsöffnung 2 zugewandten Seite 17 zum verbesserten Eingriff mit der Rändelung 7a, 7b der freien Ränder der Montageschiene 3 ebenfalls mit Rändelungen 16a, 16b versehen sind.

Für die, in Fig. 3 dargestellte Ausführung der Schienenmutter 21 wird zu deren Herstellung als Ausgangsmaterial ein Bandmaterial verwendet, das an seinen axial in Richtung des Durchbruchs 8 verlaufenden Enden 22a, 22b verbunden ist, z. B. durch Schweissen, Löten oder Kleben. Die Ausbildung der Einschnürungen 13a, 13b und 14a, 14b an der Wandung 23 kann bei einer solchen Ausführungsform der Schienenmutter 21 vor oder nach dem Verbinden der axial in Richtung des Durchbruchs 8 verlaufenden Enden 22a, 22b erfolgen.

Die in Fig. 4 dargestellte Ausführung der Schienenmutter 31 verwendet zu deren Herstellung als Ausgangsmaterial zwei Werkstückteile 34a, 34b, die an deren axial in Richtung des Durchbruchs 8 verlaufenden Enden 32a, 32b bzw. 33a, 33b verbunden sind, z. B. durch Schweissen, Löten oder Kleben. Die Ausbildung der Einschnürungen 13a, 13b und 14a, 14b an der Wandung 33 kann bei einer solchen Ausführungsform der Schienenmutter 31 vor dem Verbinden der Werkstückteile 34a, 34b bei deren Herstellung oder, analog zur in Fig. 2, nach dem Verbinden der Werkstückteile 34a, 34b erfolgen.

## Patentansprüche

1. Befestigungsvorrichtung zum Befestigen von Rohren oder dergleichen Gegenständen mit einer, eine Längsöffnung (2) aufweisenden, Montageschiene (3) und mit einer Schienenmutter (1), die eine, parallel zur Querschnittsebene verlaufende, Breite (b1) aufweist, die höchstens der Breite (b2) der Längsöffnung (2) entspricht und senkrecht dazu eine, parallel zur Querschnittsebene verlaufende, Länge (c) aufweist, die grösser als die Breite (b2) der Längsöffnung (2) ausgebildet ist, **dadurch gekennzeichnet, dass** die Schienenmutter (1) einteilig aus einem Hohlprofil gebildet ist, das an zumindest zwei Stellen eingeschnürt ist, wobei zwischen diesen beiden Einschnürungen (13a, 13b und 14a, 14b) ein Durchbruch (8) erzeugt ist, der wenigstens zwei parallel zur Längsachse des Durchbruchs (8) zueinander verlaufende Zylinderabschnitte (9a, 9b) aufweist, die jeweils Innengewindeabschnitte (10a, 10b) zur Befestigung eines Befestigungselements, insbesondere einer Gewindestange (12), aufweisen, wobei die gegenüberliegenden Wandabschnitte der Einschnürungen (13a, 13b und 14a, 14b) verbunden sind.

2. Befestigungsvorrichtung nach Anspruch 1, **dadurch gekennzeichnet, dass** radial aussen von den Einschnürungen (13a, 13b und 14a, 14b) jeweils wenigstens ein Halteabschnitt (15a, 15b) angeordnet ist.

3. Befestigungsvorrichtung nach Anspruch 2, **dadurch gekennzeichnet, dass** die Halteabschnitte (15a, 15b) eine Rändelung (16a, 16b) zum Eingriff mit den Rändern der Montageschiene (3) aufweisen.

4. Befestigungsvorrichtung nach einem der Ansprüche 1 bis 3, **dadurch gekennzeichnet, dass** das Hohlprofil aus einem Bandmaterial geformt ist.

5. Befestigungsvorrichtung nach einem der Ansprüche 1 bis 4, **dadurch gekennzeichnet, dass** das Hohlprofil aus zumindest zwei Werkstückteilen (34a, 34b) besteht.

6. Befestigungsvorrichtung nach Anspruch 4 oder 5, **dadurch gekennzeichnet, dass** zur Herstellung des Hohlprofils Blechmaterial verwendet wird.

## Claims

1. Fixing device for fixing pipes or similar objects having a mounting rail (3) with a longitudinal opening (2) and with a rail nut (1) which has a width (b1) running parallel to the transverse sectional plane which is no more than equal to the width (b2) of the longitudinal opening (2) and perpendicular thereto, a length (c) running parallel to the transverse sectional plane, which is designed larger than the width (b2) of the longitudinal opening (2), **characterised in that** the rail nut (1) is formed in one piece from a hollow profile which is constricted at least at two sites, whereby between these two constrictions (13a, 13b and 14a, 14b), a perforation (8) is created, which has at least two cylinder sections (9a, 9b) running parallel to the longitudinal axis of the perforation (8) and to each other, each of which has an internal thread section (10a, 10b) for fixing a fixing element, in particular a threaded rod (12), whereby the mutually opposed wall sections of the constrictions (13a, 13b and 14a, 14b) are bonded.

2. Fixing device according to claim 1, **characterised in that** at least one holder section (15, 15b) is arranged radially outside the constrictions (13a, 13b and 14a, 14b) in each case.

3. Fixing device according to claim 2, **characterised in that** the holder sections (15a, 15b) have a knurling (16a, 16b) for engaging with the edges of the mounting rail (3).

4. Fixing device according to one of the claims 1 to 3, **characterised in that** the hollow profile is formed from a band material.

5. Fixing device according to one of the claims 1 to 4, **characterised in that** the hollow profile comprises at least two workpiece members (34a, 34b).

6. Fixing device according to claim 4 or 5, **characterised in that** sheet metal material is used for manufacturing the hollow profile.

## Revendications

1. Dispositif de fixation pour la fixation de tubes ou d'objets analogues, avec un rail de montage (3) pourvu d'une ouverture longitudinale (2) et avec un écrou à rail (1) présentant, parallèlement au plan transversal, une largeur (b1) qui correspond au plus à la largeur (b2) de l'ouverture longitudinale (2) et, perpendiculairement à celle-ci, une longueur (c) qui s'étend parallèlement au plan transversal et qui est supérieure à la largeur (b2) de l'ouverture longitudinale (2), **caractérisé en ce que** l'écrou à rail (1) est formé d'un seul tenant à partir d'un profilé creux qui est rétréci en au moins deux endroits, entre ces deux rétrécissements (13a, 13b et 14a, 14b) étant ménagée une traversée (8) qui comporte au moins deux portions cylindriques (9a, 9b), lesquelles s'étendent parallèlement à l'axe longitudinal de la traversée (8) et comportent chacune des portions taraudées (10a, 10b) pour la fixation d'un élément de fixation, en particulier d'une tige filetée (12), les portions de paroi opposées des rétrécissements (13a, 13b et 14a, 14b) étant reliées entre elles.

2. Dispositif de fixation selon la revendication 1, **caractérisé en ce que** radialement à l'extérieur de chacun des rétrécissements (13a, 13b et 14a, 14b) est disposée au moins une portion de retenue (15a, 15b).

3. Dispositif de fixation selon la revendication 2, **caractérisé en ce que** les portions de retenue (15a, 15b) comportent un moletage (16a, 16b) pour venir en prise avec les bords du rail de montage (3).

4. Dispositif de fixation selon une des revendications 1 à 3, **caractérisé en ce que** le profilé creux est façonné à partir de matériau en bande.

5. Dispositif de fixation selon une des revendications 1 à 4, **caractérisé en ce que** le profilé creux est constitué d'au moins deux éléments (34a, 34b).

6. Dispositif de fixation selon la revendication 4 ou 5, **caractérisé en ce que** du matériau en tôle est employé pour la fabrication du profilé creux.
